# EUROPÄISCHE PATENTSCHRIFT

(11) **EP 3 696 057 B1**
(45) Veröffentlichungstag und Bekanntmachung des Hinweises auf die Patenterteilung: **21.09.2022**
(21) Anmeldenummer: 20153882.4
(22) Anmeldetag: 27.01.2020
(51) Int. Cl.: B62D 21/12, B62D 27/06, B62D 63/02

(54) **MODULAR AUFGEBAUTES FAHRZEUG-CHASSIS MIT HINTEREM RAHMENÜBERHANG**
MODULAR VEHICLE CHASSIS WITH REAR FRAME OVERHANG
CHÂSSIS DE VÉHICULE MODULAIRE POURVU DE PORTE-À-FAUX ARRIÈRE

(30) Priorität: 15.02.2019 DE 102019103859
(43) Veröffentlichungstag der Anmeldung: 19.08.2020
(73) Patentinhaber: MAN Truck & Bus SE, 80995 München (DE)
(72) Erfinder: Sattler, Steve, 80992 München (DE); Hintereder, Jürgen, 83313 Siegsdorf (DE); Drescher, Benjamin, 86932 Pürgen (DE)
(74) Vertreter: v. Bezold & Partner Patentanwälte - PartG mbB

(56) Entgegenhaltungen:
- EP-A1- 2 554 458
- EP-A1- 3 239 021
- CN-A- 103 754 265
- DE-A1- 10 150 052
- DE-A1-102016 112 416

## Beschreibung

Die Erfindung betrifft eine Fahrzeugkonstruktion, insbesondere ein Nutzfahrzeug-Chassis, vorzugsweise mit einer Vielzahl von Tragstrukturen, die jeweils ein Fahrzeug-Chassis-Modul bilden. Die Fahrzeugkonstruktion kann z. B. 2-achsig oder 3-achsig ausgebildet sein.

Zum allgemeinen Stand der Technik kann zunächst auf die DE 10 2016 112416 A1, die EP 3 239 021 A1 und die CN 103 754 265 A verwiesen werden, aus denen bereits Fahrzeugkonstruktionen mit Tragstruktur und Rahmenüberhang bekannt sind.

Im Stand der Technik sind sogenannte leiterrahmenförmige Nutzfahrzeug-Chassis mit zwei in Querrichtung voneinander beabstandeten einstückig-integral durchgängigen Längsträgern bekannt.

Derartige Nutzfahrzeug-Chassis werden in Abhängigkeit der Fahrzeuganwendung (z. B. Sattelzugmaschine, Kipper-Lastkraftwagen, etc.) konstruiert und weisen deshalb in Abhängigkeit der Fahrzeuganwendung z. B. unterschiedliche Längen, Breiten, Stärken, etc. auf. An die Nutzfahrzeug-Chassis sind ebenfalls in Abhängigkeit der Fahrzeuganwendung Funktionskomponenten (z. B. verschiedene Tanks, Motoren, Batterien, etc.) anmontiert. Einmal definiert und produziert bleibt das jeweilige Nutzfahrzeug-Chassis mitsamt seinen anmontierten Funktionskomponenten im Laufe der Fahrzeuglebensdauer üblicherweise unverändert bestehen. Nachträgliche Veränderungen sind, wenn überhaupt, nur mit erheblichem Umbauund Anpassungsaufwand zu realisieren und führen zugleich meist zu einem Eingriff in die Fahrzeugstatik.

Die Anordnung der Funktionskomponenten am Nutzfahrzeug-Chassis wird vom zur Verfügung stehenden Raum beeinflusst. Dadurch ergeben sich Zwänge hinsichtlich der Anordnung von insbesondere großen Funktionskomponenten, deren technische Lösung meist in einer Stückelung der großen Funktionskomponenten besteht, z. B. die Stückelung eines großen Tanks in mehrere kleinere Tanks, wozu oftmals auch varianztreibende Adapterlösung erforderlich sind.

Eine Aufgabe der Erfindung ist es, eine bessere und/oder alternative Fahrzeugkonstruktion zu schaffen, insbesondere eine Fahrzeugkonstruktion, die weiteren Bauraum schafft, aber dennoch flexibel einsetzbar ist.

Diese Aufgabe wird mit den Merkmalen des Hauptanspruchs gelöst. Vorteilhafte Weiterbildungen sind in den Unteransprüchen offenbart oder ergeben sich aus der folgenden Beschreibung bevorzugter Ausführungsformen der Erfindung.

Die Erfindung schafft eine Fahrzeugkonstruktion, vorzugsweise ein in seiner Längsrichtung z. B. tragstrukturell und/oder funktionell modular aufgebautes Fahrzeug-Chassis, insbesondere Nutzfahrzeug-Chassis, z. B. Lastkraftwagen- oder Transporter-Chassis.

Die Fahrzeugkonstruktion umfasst vorzugsweise eine Vielzahl von Tragstrukturen, die jeweils ein Fahrzeug-Chassis-Modul bilden können.

Die Fahrzeugkonstruktion umfasst eine hintere Tragstruktur, die ein z. B. modular austauschbares Fahrzeug-Chassis-Modul bilden kann, die vorzugsweise mehrere Anschlussknoten umfassen kann und an der z. B. eine Fahrzeug-Hinterachse montiert ist. Ferner umfasst die Fahrzeugkonstruktion einen Rahmenüberhang zweckmäßig in Längsrichtung der Fahrzeugkonstruktion hinter der hinteren Tragstruktur. Die Hinterachse ist z. B. eine hinterste Hinterachse der Fahrzeugkonstruktion, z. B. eine Triebachse oder eine Nachlaufachse.

Die Fahrzeugkonstruktion zeichnet sich vor allem dadurch aus, dass der Rahmenüberhang zumindest eine Rahmenüberhang-Tragstruktur aufweist und die Rahmenüberhang-Tragstruktur z. B. als Fahrzeug-Chassis-Modul ausgebildet ist. Der Rahmenüberhang kann zweckmäßig z. B. zumindest zwei oder zumindest drei insbesondere wie hierin offenbarte Rahmenüberhang-Tragstrukturen umfassen, die allerdings z. B. variabel in ihrer Länge und/oder Höhe sein können.

Die Rahmenüberhang-Tragstruktur kann (z. B. vier) vordere Anschlussknoten und/oder (z. B. vier) hintere Anschlussknoten aufweisen. Die Rahmenüberhang-Tragstruktur kann z. B. acht Anschlussknoten umfassen, die zweckmäßig im Wesentlichen baugleich oder unterschiedlich ausgeführt sein können.

Die Rahmenüberhang-Tragstruktur kann z. B. mehrere (insbesondere vier) Vertikalträgersegmente, mehrere Querträgersegmente und/oder beidseitig zwei im Wesentlichen in Höhenrichtung der Fahrzeugkonstruktion voneinander beabstandete Längsträgersegmente aufweisen.

Bei einer besonders bevorzugten Ausführungsform kann die Rahmenüberhang-Tragstruktur z. B. vier Längsträgersegmente und vier Vertikalträgersegmente aufweisen und zumindest ein Querträgersegment.

Es ist möglich, dass an vier vordere Anschlussknoten und/oder vier hintere Anschlussknoten der Rahmenüberhang-Tragstruktur vorzugsweise jeweils ein Längsträgersegment und/oder vorzugsweise jeweils ein Vertikalträgersegment und/oder z. B. jeweils ein Querträgersegment z. B. lösbar oder unlösbar angebunden ist.

Es ist möglich, dass der Rahmenüberhang und/oder die Rahmenüberhang-Tragstruktur sich vorzugsweise mit ihrer Unterseite zumindest abschnittsweise nach hinten oben verjüngt und/oder an deren Hinterseite eine kleinere Höhe aufweist als an deren Vorderseite. Insbesondere können z. B. Vertikalträgersegmente an der Hinterseite kürzer sein als an der Vorderseite.

Es ist möglich, dass der Rahmenüberhang und/oder die Rahmenüberhang-Tragstruktur hinten (Hinterseite) kürzere Vertikalträgersegmente aufweist als vorne (Vorderseite).

Zwei hintere untere Anschlussknoten können z. B. weiter oben angeordnet sein als zwei vordere untere Anschlussknoten des Rahmenüberhangs und/oder der Rahmenüberhang-Tragstruktur.

Zwei untere Längsträgersegmente des Rahmenüberhangs und/oder der Rahmenüberhang-Tragstruktur können sich z. B. nach hinten oben erstrecken, vorzugsweise schräg oder im Wesentlichen S-förmig.

Die Rahmenüberhang-Tragstruktur kann z. B. zumindest eine im Wesentlichen horizontale Aussteifungsplatte umfassen, die z. B. an Längsträgersegmente der Rahmenüberhang-Tragstruktur angebunden sein kann. Die Rahmenüberhang-Tragstruktur kann auch zumindest eine im Wesentlichen vertikale Aussteifungsplatte aufweisen, die an Vertikalträgersegmente angebunden sein kann. Die Aussteifungsplatte kann z. B. aus Blech, insbesondere gekantetem Blech, ausgebildet sein.

Die hintere Tragstruktur kann zumindest zwei (z. B. vier) vordere Anschlussknoten und/oder zumindest zwei (z. B. vier) hintere Anschlussknoten aufweisen.

Die Rahmenüberhang-Tragstruktur und die hintere Tragstruktur können mittels z. B. vier Anschlussknoten-Paare lösbar miteinander verbunden sein.

Der Rahmenüberhang kann zumindest zwei oder zumindest drei als Fahrzeug-Chassis-Module ausgebildete Rahmenüberhang-Tragstrukturen umfassen, die jeweils mittels vorzugsweise vier Anschlussknoten-Paare lösbar miteinander verbunden sind und die vorzugsweise wie hierin offenbart ausgebildet sein können.

Es ist möglich, dass die hintere Tragstruktur die hinterste Hinterachse der Fahrzeugkonstruktion aufweist und/oder eine Triebachse oder z. B. eine liftbare Nachlaufachse aufweist.

Auch die hintere Tragstruktur kann z. B. mehrere (z. B. vier) Vertikalträgersegmente, mehrere Querträgersegmente und beidseitig zumindest ein Längsträgersegment, vorzugsweise zwei im Wesentlichen in Höhenrichtung der Fahrzeugkonstruktion voneinander beabstandete Längsträgersegmente aufweisen.

Es ist möglich, dass die Vertikalträgersegmente, die Querträgersegmente und/oder die Längsträgersegmente der Rahmenüberhang-Tragstruktur zumindest abschnittsweise als Blech- oder Profilbauteile oder eine Kombination hiervon ausgebildet sind.

Es ist möglich, dass zumindest einige der Anschlussknoten der Rahmenüberhang-Tragstruktur als Guss-, Schmiede- oder Blechbauteil ausgebildet sind.

Es ist möglich, dass die Vertikalträgersegmente, die Querträgersegmente und/oder die Längsträgersegmente der hinteren Tragstruktur zumindest abschnittsweise als Blech- oder Profilbauteile oder eine Kombination hiervon ausgebildet sind.

Es ist möglich, dass zumindest einige der Anschlussknoten der hinteren Tragstruktur als Guss-, Schmiede- oder Blechbauteil ausgebildet sind.

Die Fahrzeugkonstruktion kann eine Vielzahl von Tragstrukturen vor der hinteren Tragstruktur umfassen, die jeweils ein Fahrzeug-Chassis-Modul bilden, jeweils mehrere Anschlussknoten aufweisen und die jeweils über vorzugsweise vier Anschlussknoten-Paare (zweckmäßig benachbarte Anschlussknoten) z. B. lösbar miteinander verbunden sein können. Die Fahrzeugkonstruktion kann vor der hinteren Tragstruktur z. B. zumindest zwei, zumindest drei, zumindest vier oder zumindest fünf Tragstrukturen aufweisen, die jeweils vorzugsweise ein Fahrzeug-Chassis-Modul bilden.

Zumindest einige der Anschlussknoten-Paare sind mittels jeweils einer Klemmverbindung lösbar miteinander verbunden und/oder über jeweils zumindest ein im Wesentlichen in Querrichtung der Fahrzeugkonstruktion erstreckendes Spannelement (z. B. Spannschraube) lösbar miteinander verbunden.

Es ist möglich, dass einige Anschlussknoten-Paare über ein ersten Knotenkonzept lösbar miteinander verbunden sind und andere Anschlussknoten-Paare über ein anderes zweites Knotenkonzept miteinander lösbar verbunden sind. Z. B. können die Rahmenüberhang-Tragstruktur und die hintere Tragstruktur vorzugsweise mittels zwei oberen Anschlussknoten-Paaren gemäß einem erste Knotenkonzept lösbar miteinander verbunden sein und mittels zwei unteren Anschlussknoten-Paaren gemäß einem zweiten Knotenkonzept lösbar miteinander verbunden sein. Das gleiche gilt zweckmäßig z. B. auch für die anderen Anschlussknoten-Paare.

Die Klemmverbindung umfasst jeweils zwei Klemmbacken und/oder zumindest ein Spannelement, wobei die zwei Klemmbacken über das Spannelement (z. B. eine zweckmäßig zentrale Spannschraube) zueinander hin beaufschlagbar sind.

Die Klemmbacken können z. B. im Wesentlichen U-, Omega- oder C-förmige Klemmbacken sein.

Das Spannelement beaufschlagt die zwei Klemmbacken im Wesentlichen in Querrichtung der Fahrzeugkonstruktion zueinander hin. Alternativ oder ergänzend beaufschlagen die zwei Klemmbacken die Anschlussknoten-Paare im Wesentlichen in Längsrichtung der Fahrzeugkonstruktion zueinander hin.

Das Spannelement erstreckt sich vorzugsweise im Wesentlichen in Querrichtung der Fahrzeugkonstruktion. Die Spannrichtung, z. B. Verschraubungsrichtung, kann folglich vorzugsweise im Wesentlichen der Querrichtung der Fahrzeugkonstruktion entsprechen.

Die Klemmverbindung kann z. B. auch zwei Spannelemente aufweisen, z. B. jeweils ein Spannelement pro Anschlussknoten.

Im Kontext der Erfindung können die zwei Klemmbacken relativ zu den benachbarten Anschlussknoten z. B. lösbare und/oder separate Bauteile sein, wobei es auch möglich ist, dass einer der Klemmbacken unlösbar, z. B. einstückig-integral, an einem der benachbarten Anschlussknoten ausgebildet ist, z. B. angeformt, angegossen, angeschmiedet, angeschweißt, etc. ist.

Einer der Klemmbacken kann somit z. B. unlösbar und/oder einstückig integral an einem der benachbarten Anschlussknoten ausgebildet sein.

Das Spannelement erstreckt sich vorzugsweise im Wesentlichen in Querrichtung der Fahrzeugkonstruktion und ist z. B. von seitlich außen zum Spannen und/oder Lösen betätigbar.

Es ist möglich, dass die Tragstrukturen insbesondere lösbar tragstrukturell und/oder wiederholt montierbar miteinander verbunden sind, z. B. über benachbarte Anschlussknoten, insbesondere Anschlussknoten-Paare.

Die jeweilige Tragstruktur kann z. B. zumindest einen, vorzugsweise zumindest zwei in Längsrichtung der Fahrzeugkonstruktion voneinander beabstandete Querträgersegmente (z. B. eine oder mehrere Schubaussteifungen, Ringspanten und/oder Schubbleche) aufweisen, vorzugsweise zwei obere in Längsrichtung der Fahrzeugkonstruktion voneinander beabstandete Querträgersegmente und/oder zwei untere in Längsrichtung der Fahrzeugkonstruktion voneinander beabstandete Querträgersegmente.

Es ist möglich, dass die jeweilige Tragstruktur (z. B. einzelne und/oder separate) Anschlussknoten aufweist. Die Anschlussknoten können zweckmäßig z. B. lösbar oder unlösbar in die jeweilige Tragstruktur integriert sein.

Es ist möglich, dass die Anschlussknoten der jeweiligen Tragstruktur zur vorzugsweise lösbaren und/oder wiederholt montierbaren Verbindung oder unlösbaren Verbindung mit jeweils einem Längsträgersegment, einem Querträgersegment und/oder einem Vertikalträgersegment der jeweiligen Tragstruktur dienen. Auch hier können alternativ oder ergänzend z. B. diagonal verlaufende Trägersegmente zum Einsatz kommen.

Es ist möglich, dass die Längsträgersegmente der Tragstrukturen über benachbarte Anschlussknoten miteinander verbunden sind und in Querrichtung der Fahrzeugkonstruktion voneinander beabstandete Chassis-Längsträgerkonstruktionen bilden.

Im Kontext der Erfindung können somit insbesondere Zug- und/oder Druckkräfte in den Längsträgersegmenten über die benachbarten Anschlussknoten vorteilhaft übertragen werden.

Es ist möglich, dass benachbarte Anschlussknoten der Tragstrukturen zur lösbaren Verbindung und/oder wiederholt montierbaren Verbindung der Tragstrukturen miteinander dienen, so dass die Tragstrukturen über lösbar aneinander montierte Anschlussknoten (zweckmäßig Anschlussknoten-Paare) miteinander verbunden sein können.

Benachbarte Anschlussknoten können somit vorzugsweise lösbar aneinander montiert sein und/oder Anschlussknoten-Paare bilden.

Es ist möglich, dass aneinander montierte benachbarte Anschlussknoten im Wesentlichen in Längsrichtung der Fahrzeugkonstruktion auf Stoß aneinander anliegen, und/oder über jeweils eine in Höhen- und in Querrichtung der Fahrzeugkonstruktion ausgerichtete Schnittebene voneinander trennbar sind.

Die jeweilige Tragstruktur kann z. B. vier vordere Anschlussknoten und/oder vier hintere Anschlussknoten aufweisen, wobei die vier vorderen Anschlussknoten und/oder die vier hinteren Anschlussknoten z. B. Eckpunkte der jeweiligen Tragstruktur bilden können.

Es ist möglich, dass die jeweilige Tragstruktur eine im Wesentlichen Quaderform bildet und die Quaderform z. B. durch die Anschlussknoten und alternativ oder ergänzend durch die Längsträgersegmente, die Querträgersegmente und/oder die Vertikalträgersegmente der jeweiligen Tragstruktur definiert wird. Dadurch können im Wesentlichen quaderförmige Tragstrukturen erzeugt werden.

Es ist möglich, die hinteren Anschlussknoten entfallen zu lassen und nur über einen Querträger die Rahmenüberhang-Tragstruktur zu schließen, insbesondere was die in Längsrichtung hinterste Rahmenüberhang-Tragstruktur anbelangt.

Es ist möglich, dass die jeweilige Tragstruktur als (z. B. im Wesentlichen quaderförmige) Gitter- oder Geripperahmenkonstruktion ausgebildet ist.

Die Tragstrukturen sind vorzugsweise selbstragend ausgebildet (und insbesondere entsprechend ihrer Aufgabe in der Gesamttragstruktur dimensioniert).

Die Fahrzeugkonstruktion ist z. B. modular, insbesondere modulbaukastenartig, umkonfigurierbar, insbesondere auch nach der ursprünglichen Endmontage der Fahrzeugkonstruktion.

Zu erwähnen ist, dass die hierin erwähnte "lösbare Verbindung" vorzugsweise ausgeführt sein kann, so dass die lösbar miteinander verbundenen Teile insbesondere wiederholt montierbar sind, also z. B. mehrfach voneinander getrennt und wieder aneinander montiert werden können.

Zu erwähnen ist noch, dass die Längsrichtung der Fahrzeugkonstruktion im Kontext der Erfindung z. B. im Wesentlichen parallel zur Mittelachse der Fahrzeugkonstruktion verlaufen kann und/oder z. B. durch die Längserstreckung der Längsträgersegmente definiert werden kann.

Die Längsträgersegmente können z. B. mit einer Abweichung im Bereich von max. ungefähr +/-35, +/-25°, +/-10° oder +/-5° schräg zur Mittelachse der Fahrzeugkonstruktion verlaufen.

Die Querrichtung und/oder Höhenrichtung der Fahrzeugkonstruktion kann zweckmäßig im Wesentlichen rechtwinklig (z. B. mit einer Abweichung im Bereich von max. ungefähr +/-35, +/-25°, +/-10° oder +/-5°) zur Mittelachse der Fahrzeugkonstruktion ausgerichtet sein.

Die benachbarten Anschlussknoten können jeweils z. B. als ein Blechteil oder ein Guss-, Schmiede- oder Frästeil ausgebildet sein und folglich vorzugsweise mittels eines Guss-, Schmiede- oder Fräsverfahrens hergestellt sein.

Es können alle vier oder nur einige der vier Anschlussknoten-Paare, z. B. nur zwei der Anschlussknoten-Paare, mit z. B. der Klemmverbindung wie hierin offenbart verbunden sein. Es ist also möglich, dass zwei Tragstrukturen über unterschiedliche Anschlussknoten und/oder unterschiedliche Anschlussknoten-Verbindungen lösbar miteinander verbunden sind.

Die Erfindung umfasst auch ein Gesamtfahrzeug z. B. in Form eines Nutzfahrzeugs, vorzugsweise ein Lastkraftwagen (z. B. Sattelzugmaschine oder Transporter), mit einer Fahrzeugkonstruktion wie hierin offenbart.

Die zuvor beschriebenen bevorzugten Ausführungsformen und Merkmale der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Figur 1: zeigt eine perspektivische Ansicht einer Fahrzeugkonstruktion gemäß einer Ausführungsform der Erfindung,
- Figur 2: zeigt eine vergrößerte Darstellung eines Rahmenüberhangs der Figur 1,
- Figur 3: zeigt eine perspektivische Ansicht einer hinteren Tragstruktur gemäß einer Ausführungsform der Erfindung,
- Figur 4: zeigt eine perspektivische Ansicht einer Fahrzeugkonstruktion gemäß einer anderen Ausführungsform der Erfindung, und
- Figur 5: zeigt ein Knotenkonzept zur Verbindung eines Anschlussknoten-Paares (zweckmäßig benachbarte Anschlussknoten) für eine Fahrzeugkonstruktion gemäß einer Ausführungsform der Erfindung.

Die in den Figuren beschriebenen bevorzugten Ausführungsformen der Erfindung stimmen teilweise überein, wobei für ähnliche oder identische Teile die gleichen Bezugszeichen verwendet werden und zu deren Erläuterung auch auf die Beschreibung der anderen Ausführungsformen verwiesen werden kann. Der Übersichtlichkeit halber sind nicht alle Teile in allen Figuren mit Bezugszeichen versehen.

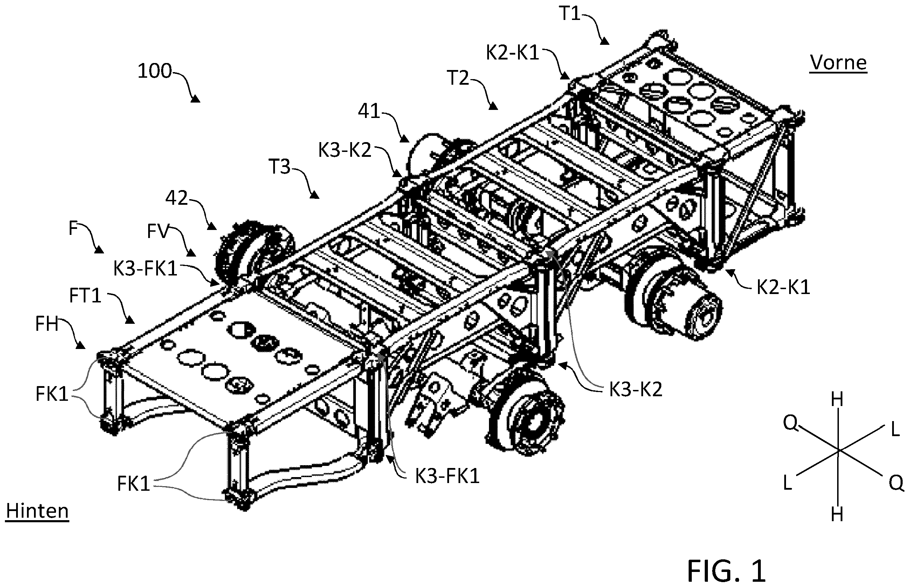

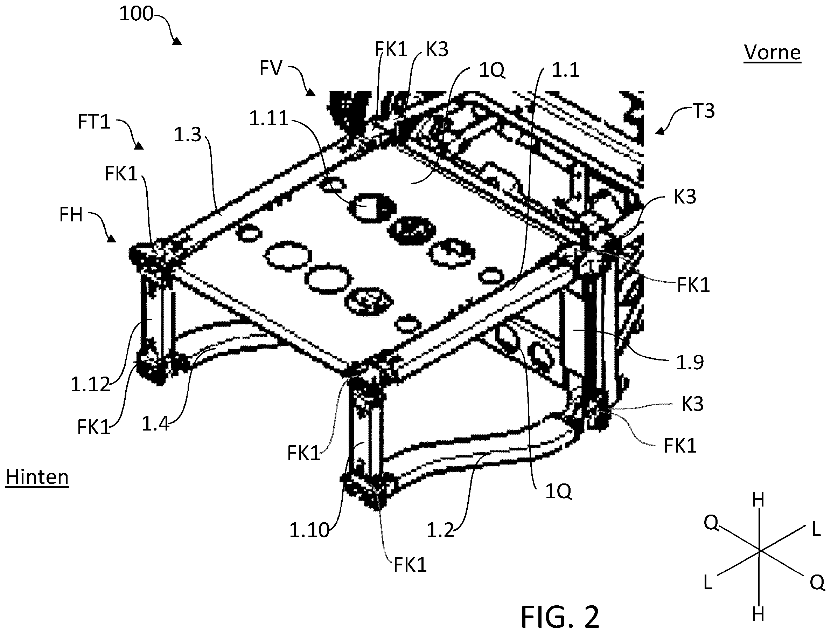

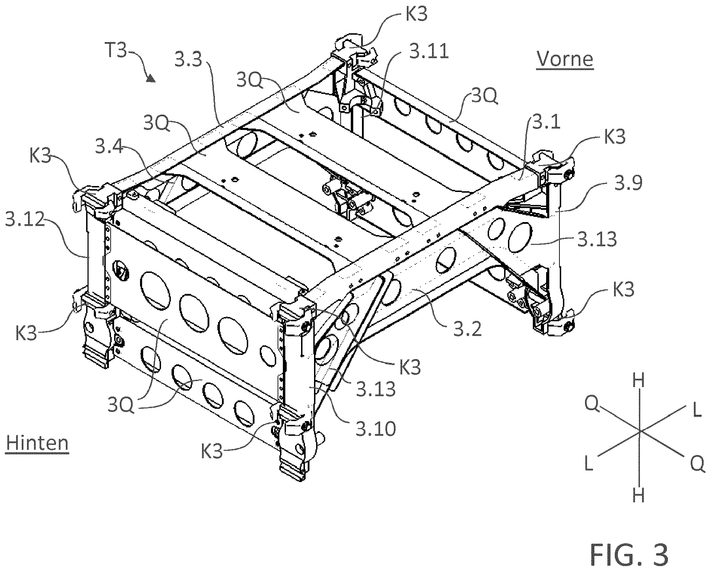

Figur 1 zeigt eine perspektivische Ansicht einer beispielhaften Fahrzeugkonstruktion 100 gemäß einer Ausführungsform der Erfindung. Figur 2 zeigt eine vergrößerte Darstellung eines Rahmenüberhangs F der Figur 1, insbesondere eine vergrößerte Darstellung einer Rahmenüberhang-Tragstruktur FT1, die mit einer hinteren Tragstruktur T3 über z. B. vier Anschlussknoten-Paare K3-FK1 lösbar verbunden ist. Die Figur 3 zeigt eine perspektivische Ansicht einer hinteren Tragstruktur T3 gemäß einer Ausführungsform der Erfindung, die allerdings gegenüber der in den Figuren 1 und 2 gezeigten hinteren Tragstruktur T3 leicht modifiziert ist.

Die Fahrzeugkonstruktion 100 wird nachfolgend unter gemeinsamer Bezugnahme auf die Figuren 1 bis 3 beschrieben.

Die Fahrzeugkonstruktion 100 ist zweckmäßig als ein in ihrer Längsrichtung L tragstrukturell und vorzugsweise funktionell modular aufgebautes Fahrzeug-Chassis für ein Gesamtfahrzeug in Form eines Nutzfahrzeugs ausgeführt.

Die Fahrzeugkonstruktion 100 umfasst eine Vielzahl an Tragstrukturen T1, T2, T3 und FT1, die jeweils ein Fahrzeug-Chassis-Modul bilden.

Die Fahrzeugkonstruktion 100 umfasst vorzugsweise ein nicht gezeigtes Vorderachsmodul mit einer Vorderachse.

Die Fahrzeugkonstruktion 100 umfasst eine hintere Tragstruktur T3 mit einer Fahrzeug-Achse 42, die die vorzugsweise hinterste Fahrzeug-Achse der Fahrzeugkonstruktion 100 bildet. Die hintere Tragstruktur T3 ist als Fahrzeug-Chassis-Modul ausgebildet.

In Längsrichtung L der Fahrzeugkonstruktion 100 vor der hinteren Tragstruktur T3 ist eine ebenfalls als Fahrzeug-Chassis-Modul ausgebildete Tragstruktur T2 angeordnet, die ebenfalls eine Fahrzeug-Achse 41 trägt.

Die Fahrzeug-Achse 42 kann z. B. eine Triebachse zum Antreiben der Fahrzeugkonstruktion 100 und somit des Nutzfahrzeugs sein, wobei dann die Fahrzeug-Achse 41 vorzugsweise eine Vorlaufachse bildet. Es ist aber auch möglich, dass die Fahrzeug-Achse 41 eine Triebachse zum Antreiben der Fahrzeugkonstruktion 100 und somit des Nutzfahrzeugs bildet, wobei dann die Fahrzeug-Achse 42 vorzugsweise eine Nachlaufachse ist. Der Einsatz von Vor- oder Nachlaufachsen ist allerdings optional.

In Längsrichtung L der Fahrzeugkonstruktion 100 vor der Tragstruktur T2 und hinter dem Vorderachsmodul umfasst die Fahrzeugkonstruktion 100 zumindest eine weitere als Fahrzeug-Chassis-Modul ausgebildete Tragstruktur T1, vorzugsweise eine Vielzahl an als Fahrzeug-Chassis-Modul ausgebildeten Tragstrukturen T1.

Die hintere Tragstruktur T3 umfasst vorzugsweise zwei obere, hintere und in Querrichtung Q der Fahrzeugkonstruktion 100 voneinander beabstandete Anschlussknoten K3 und vorzugsweise auch zwei untere, hintere und in Querrichtung Q der Fahrzeugkonstruktion 100 voneinander beabstandete Anschlussknoten K3.

Darüber hinaus umfasst die Tragstruktur T3 vorzugsweise zwei obere, vordere und in Querrichtung Q der Fahrzeugkonstruktion 100 voneinander beabstandete Anschlussknoten K3 und vorzugsweise zwei untere, vordere und in Querrichtung Q der Fahrzeugkonstruktion 100 voneinander beabstandete Anschlussknoten K3.

Die Tragstruktur T3 umfasst zweckmäßig beidseitig zwei in Höhenrichtung H der Fahrzeugkonstruktion 100 voneinander beabstandete Längsträgersegmente 3.1 bis 3.4 und beidseitig zwei in Längsrichtung L der Fahrzeugkonstruktion 100 voneinander beabstandete Vertikalträgersegmente 3.9 bis 3.12 und zusätzlich horizontale und vertikale als blechförmige Aussteifungsplatten ausgebildete Querträgersegmente 3Q. Zu beachten ist, dass z. B. die Längsträgersegmente 3.1 und 3.2 auch durch ein Längsträgersegment ersetzt werden können, ebenso die Längsträgersegmente 3.3 und 3.4.

In Längsrichtung L der Fahrzeugkonstruktion 100 hinter der hinteren Tragstruktur T3 ist der Rahmenüberhang F angeordnet. Der Rahmenüberhang F umfasst eine Rahmenüberhang-Tragstruktur FT1, die als Fahrzeug-Chassis-Modul ausgebildet ist und insbesondere vier vordere Anschlussknoten FK1 und vorzugsweise (z. B. vier) hintere Anschlussknoten FK1 aufweist.

Die Rahmenüberhang-Tragstruktur FT1 umfasst vier Vertikalträgersegmente 1.9-1.12, mehrere Querträgersegmente 1Q und beidseitig zwei im Wesentlichen in Höhenrichtung H der Fahrzeugkonstruktion 100 voneinander beabstandete Längsträgersegmente 1.1-1.4.

An die vier vorderen Anschlussknoten FK1 und die vier hinteren Anschlussknoten FK1 der Rahmenüberhang-Tragstruktur FT1 ist jeweils ein Längsträgersegment 1.1-1.4 und jeweils ein Vertikalträgersegment 1.9-1.12 z. B. lösbar oder unlösbar angebunden. Es sind auch Ausführungsformen möglich, in denen zusätzlich jeweils ein Querträgersegment an die vier vorderen Anschlussknoten FK1 und die vier hinteren Anschlussknoten FK1 der Rahmenüberhang-Tragstruktur FT1 z. B. lösbar oder unlösbar angebunden ist.

Die Rahmenüberhang-Tragstruktur FT1 verjüngt sich nach hinten oben und weist an ihrer Hinterseite FH eine kleinere Höhe auf als an ihrer Vorderseite FV. Insbesondere sind die hinteren Vertikalträgersegmente 1.10, 1.12 kürzer als die vorderen Vertikalträgersegmente 1.9, 1.11 und die zwei hinteren unteren Anschlussknoten FK1 sind weiter oben angeordnet als die zwei vorderen unteren Anschlussknoten FK1. Die zwei unteren Längsträgersegmente 1.2, 1.4 erstrecken sich in Längsrichtung L der Fahrzeugkonstruktion 100 nach hinten oben und zwar vorzugsweise im Wesentlichen S-förmig.

Die Vertikalträgersegmente 1.9-1.12, die Querträgersegmente 3.5-3.8 und die Längsträgersegmente 1.1-1.4 der Rahmenüberhang-Tragstruktur FT1 sind vorzugsweise als Blechoder Profilbauteile ausgebildet. Das gleiche gilt für die Vertikalträgersegmente 3.9-3.12, die Querträgersegmente 3.5-3.8 und die Längsträgersegmente 3.1-3.4 der hinteren Tragstruktur T3 und kann zweckmäßig ebenso für die anderen Tragstrukturen T1 gelten.

Die hintere Tragstruktur T3 umfasst vier hintere Anschlussknoten K3 und die Rahmenüberhang-Tragstruktur FT1 umfasst vier vordere Anschlussknoten FK1.

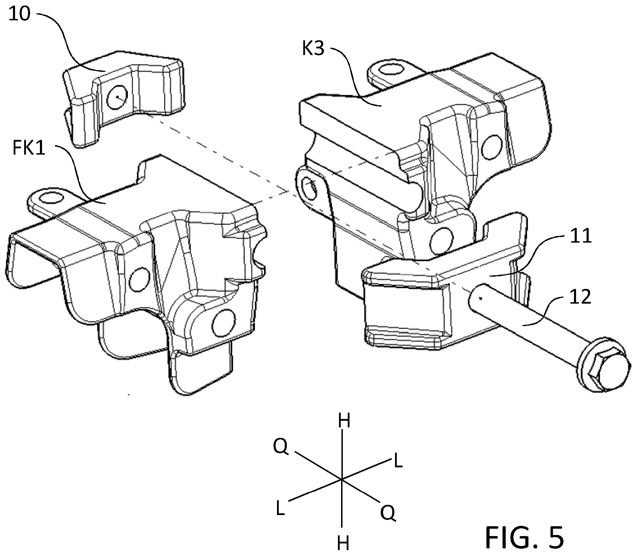

Dadurch wird ermöglicht, dass die Rahmenüberhang-Tragstruktur FT1 und die hintere Tragstruktur T3 über vier Anschlussknoten-Paare K3-FT1 (benachbarte Anschlussknoten) lösbar miteinander verbunden werden können und zwar z. B. über ein wie in Figur 5 gezeigtes Knotenkonzept.

Es ist möglich, dass auch die zur Tragstruktur T3 benachbarte Tragstruktur T2 z. B. vier Anschlussknoten K2 aufweist und die Tragstruktur T3 und die Tragstruktur T2 über vorzugsweise vier Anschlussknoten-Paare K3-K2 vorzugsweise lösbar miteinander verbunden sind.

Auch die Tragstruktur T2 kann mit der Tragstruktur T1 über z. B. vier Anschlussknoten-Paare K2-K1 vorzugsweise lösbar verbunden sein.

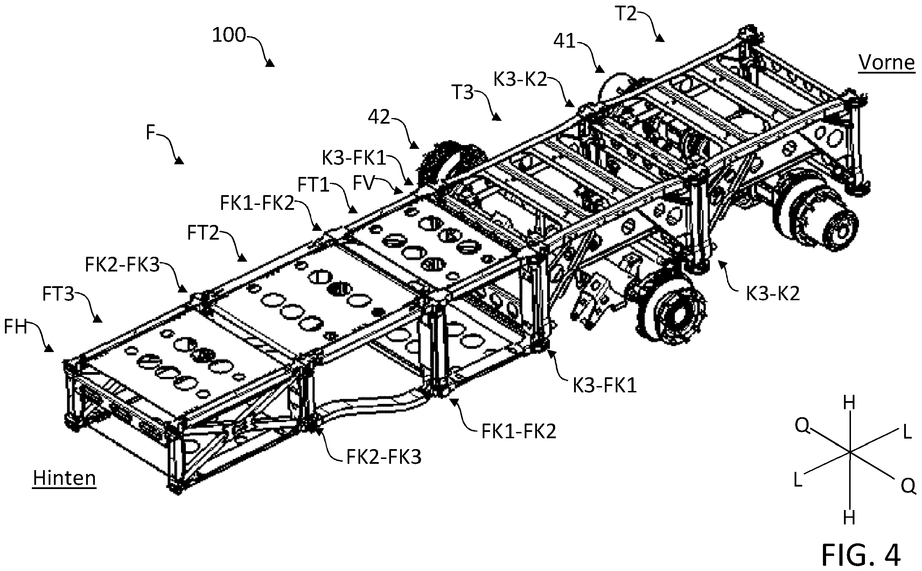

Figur 4 zeigt eine perspektivische Ansicht einer Fahrzeugkonstruktion 100 gemäß einer anderen Ausführungsform der Erfindung.

Eine Besonderheit ist, dass die in Figur 4 gezeigte Fahrzeugkonstruktion 100 einen Rahmenüberhang F mit drei unterschiedlich ausgebildeten Rahmenüberhang-Tragstrukturen FT1, FT2 und FT3, die jeweils als Fahrzeug-Chassis-Modul ausgebildet sind.

Die Rahmenüberhang-Tragstruktur FT1 umfasst vier vordere Anschlussknoten FK1 und vier hintere Anschlussknoten FK1 sowie vier Vertikalträgersegmente, mehrere Querträgersegmente und beidseitig zwei im Wesentlichen in Höhenrichtung H der Fahrzeugkonstruktion 100 voneinander beabstandete Längsträgersegmente.

Die Rahmenüberhang-Tragstruktur FT2 umfasst vier vordere Anschlussknoten FK2 und vier hintere Anschlussknoten FK2 sowie vier Vertikalträgersegmente, mehrere Querträgersegmente und beidseitig zwei im Wesentlichen in Höhenrichtung H der Fahrzeugkonstruktion 100 voneinander beabstandete Längsträgersegmente.

Die Rahmenüberhang-Tragstruktur FT3 umfasst ebenfalls vier vordere Anschlussknoten FK3 und vier hintere Anschlussknoten FK3 sowie ebenfalls vier Vertikalträgersegmente, mehrere Querträgersegmente und beidseitig zwei im Wesentlichen in Höhenrichtung H der Fahrzeugkonstruktion 100 voneinander beabstandete Längsträgersegmente.

Die Rahmenüberhang-Tragstruktur FT1 kann wie bereits beschrieben mit der hinteren Tragstruktur T3 über die Anschlussknoten-Paare K3-FT1 lösbar verbunden sein.

Die Rahmenüberhang-Tragstruktur FT1 und die Rahmenüberhang-Tragstruktur FT2 sind ebenfalls über vier Anschlussknoten-Paare FK1-FK2 lösbar miteinander verbunden.

Die Rahmenüberhang-Tragstruktur FT2 und die Rahmenüberhang-Tragstruktur FT3 sind ebenfalls über vier Anschlussknoten-Paare FK2-FK3 lösbar miteinander verbunden.

Figur 5 zeigt ein Knotenkonzept zur Verbindung eines Anschlussknoten-Paares (zweckmäßig benachbarte Anschlussknoten) für eine Fahrzeugkonstruktion 100 gemäß einer Ausführungsform der Erfindung. Zumindest einige der hierin offenbarten Anschlussknoten-Paare können vorzugsweise gemäß einem Knotenkonzept wie in Figur 5 gezeigt ausgeführt werden.

Das Knotenkonzept wird beispielhaft für ein oberes Anschlussknoten-Paar K3-FK1 zwischen der Rahmenüberhang-Tragstruktur FT1 und der hinteren Tragstruktur T3 beschrieben.

Eine Besonderheit des Knotenkonzepts ist, dass die benachbarten Anschlussknoten K3, FK1 und somit das Anschlussknoten-Paar K3-FK1 über eine Klemmverbindung lösbar miteinander verbunden sind.

Die Klemmverbindung umfasst zwei im Wesentlichen U-, Omega- oder C-förmige Klemmbacken 10 und 11. Die Klemmbacken 10, 11 sind über ein Spannelement 12 (z. B. eine zentrale Spannschraube) im Wesentlichen in Querrichtung Q der Fahrzeugkonstruktion 100 zueinander hin beaufschlagbar, wodurch die benachbarten Anschlussknoten K3, FK1 im Wesentlichen in Längsrichtung L der Fahrzeugkonstruktion 100 zueinander hin beaufschlagt werden können.

Die Klemmbacken 10,11 erstrecken sich im Wesentlichen in Längsrichtung L der Fahrzeugkonstruktion 100, während sich das Spannelement 12 im Wesentlichen in Querrichtung Q der Fahrzeugkonstruktion 100 erstreckt.

Es ist möglich, dass die Längsträgersegmente, Querträgersegmente und/oder Vertikalträgersegmente z. B. auch zweckmäßig schräg und somit nicht rechtwinklig zum Koordinatensystem L-Q-H verlaufen können. Es ist möglich, dass die Anschlussknoten z. B. lösbar an Längsträgersegmente, Querträgersegmente und/oder Vertikalträgersegmente der jeweiligen Tragstruktur zweckmäßig anmontiert sein können und somit z. B. Einzelbauteile darstellen können. Alternativ oder ergänzend ist es möglich, dass die Anschlussknoten z. B. unlösbar (z. B. einstückig-integral und/oder durch eine Schweißverbindung etc.) an Längsträgersegmenten, Querträgersegmenten und/oder Vertikalträgersegmenten der jeweiligen Tragstruktur zweckmäßig ausgebildet sein können und somit z. B. die Anschlussknoten und die Längsträgersegmente, die Querträgersegmente und/oder die Vertikalträgersegmente ein (z. B. im Wesentlichen knochenförmiges) Einzelbauteil bilden können. Im Kontext der Erfindung kann z. B. an einem ersten (zweckmäßig inneren) Knoten ein Stabelement (z. B. ähnlich einer Schraube, vorzugsweise mit Gewinde) ausgebildet sein, z. B. angegossen oder angeschmiedet sein. Außenseitig kann z. B. ein Gewinde ausgebildet sein und ein zweiter (zweckmäßig äußerer) Knoten kann zweckmäßig mit dem Stabelement verbunden werden.

### Bezugszeichenliste

- T1: Tragstruktur
- K1: Anschlussknoten

- T2: Tragstruktur
- K2: Anschlussknoten

- T3: hintere Tragstruktur, vorzugsweise mit Trieb- oder Laufachse, insbesondere Nachlaufachse
- K3: Anschlussknoten
- 3.1 bis 3.4: Längsträgersegmente
- 3.9 bis 3.12: Vertikalträgersegmente
- 3Q: Querträgersegmente

- 41: Triebachse
- 42: Laufachse, vorzugsweise Vorlauf- oder Nachlaufachse

- F: hinterer Rahmenüberhang
- FT1: Rahmenüberhang-Tragstruktur
- FK1: Anschlussknoten
- FV: Vorderseite Rahmenüberhang/Rahmenüberhang-Tragstruktur
- FH: Hinterseite Rahmenüberhang/Rahmenüberhang-Tragstruktur
- 1.1 bis 1.4: Längsträgersegmente
- 1.9 bis 1.12: Vertikalträgersegmente
- 1Q: Querträgersegmente

- FT2: Rahmenüberhang-Tragstruktur
- FK2: Anschlussknoten

- FT3: Rahmenüberhang-Tragstruktur
- FK3: Anschlussknoten

- 10: Klemmbacke
- 11: Klemmbacke
- 12: Spannelement

- L: Längsrichtung der Fahrzeugkonstruktion
- Q: Querrichtung der Fahrzeugkonstruktion
- H: Höhenrichtung der Fahrzeugkonstruktion

- 100: Fahrzeugkonstruktion

## Patentansprüche

1. Fahrzeugkonstruktion (100), vorzugsweise mit einer Vielzahl von Tragstrukturen (T1, T2, T3, FT1, FT2, FT3), die jeweils ein Fahrzeug-Chassis-Modul bilden, mit
- einer hinteren Tragstruktur (T3), an der eine Hinterachse (41, 42) montiert ist und die vorzugsweise ein Fahrzeug-Chassis-Modul bildet und mehrere Anschlussknoten (K3) umfasst, und
- einem Rahmenüberhang (F) hinter der hinteren Tragstruktur (T3),
**dadurch gekennzeichnet, dass**
- der Rahmenüberhang (F) zumindest eine Rahmenüberhang-Tragstruktur (FT1) aufweist und die Rahmenüberhang-Tragstruktur (FT1) als Fahrzeug-Chassis-Modul ausgebildet ist,
wobei zumindest einige Anschlussknoten-Paare (K2-K3, K3-FK1, FK1-FK2-, FK2-FK3) zwischen der hinteren Tragstruktur (T3) und der Rahmenüberhang-Tragstruktur (FT1) und/oder zwischen zwei Rahmenüberhang-Tragstrukturen (FT1, FT2) mittels jeweils einer Klemmverbindung lösbar miteinander verbunden sind und/oder über jeweils zumindest ein im Wesentlichen in Querrichtung (Q) der Fahrzeugkonstruktion (100) erstreckendes Spannelement (12) lösbar miteinander verbunden sind,
wobei die Klemmverbindung jeweils zwei Klemmbacken (10, 11) und/oder zumindest ein vorzugsweise im Wesentlichen in Querrichtung (Q) der Fahrzeugkonstruktion (100) erstreckendes ein Spannelement (12) umfasst, und
wobei die zwei Klemmbacken (10, 11) über das Spannelement (12) zueinander hin beaufschlagbar sind, wobei das Spannelement (12) die zwei Klemmbacken (10, 11) im Wesentlichen in Querrichtung (Q) der Fahrzeugkonstruktion (100) zueinander hin beaufschlagt und/oder wobei die zwei Klemmbacken (10, 11) die Anschlussknoten-Paare (K2-K3, K3-FK1, FK1-FK2-, FK2-FK3) im Wesentlichen in Längsrichtung (L) der Fahrzeugkonstruktion (100) zueinander hin beaufschlagt.

2. Fahrzeugkonstruktion (100) nach Anspruch 1, **dadurch gekennzeichnet, dass** die Rahmenüberhang-Tragstruktur (FT1) vordere Anschlussknoten (FK1) und/oder hintere Anschlussknoten (FK1) aufweist.

3. Fahrzeugkonstruktion (100) nach Anspruch 1 oder 2, **dadurch gekennzeichnet, dass** die Rahmenüberhang-Tragstruktur (FT1) mehrere Vertikalträgersegmente (1.9-1.12), mehrere Querträgersegmente (1Q) und beidseitig zwei im Wesentlichen in Höhenrichtung (H) der Fahrzeugkonstruktion (100) voneinander beabstandete Längsträgersegmente (1.1-1.4), aufweist.

4. Fahrzeugkonstruktion (100) nach Anspruch 2 oder 3, **dadurch gekennzeichnet, dass** an vier vordere Anschlussknoten (FK1) und/oder vier hintere Anschlussknoten (FK1) der Rahmenüberhang-Tragstruktur (FT1) jeweils ein Längsträgersegment (1.1-1.4) angebunden ist und vorzugsweise jeweils ein Vertikalträgersegment (1.9-1.12) und/oder jeweils ein Querträgersegment (1Q).

5. Fahrzeugkonstruktion (100) nach einem der vorhergehenden Ansprüche, **dadurch gekennzeichnet, dass** der Rahmenüberhang (F) und/oder die Rahmenüberhang-Tragstruktur (FT1) sich zumindest abschnittsweise nach hinten oben verjüngt und/oder an deren Hinterseite (FH) eine kleinere Höhe aufweist als an deren Vorderseite (FV).

6. Fahrzeugkonstruktion (100) nach einem der vorhergehenden Ansprüche, **dadurch gekennzeichnet, dass**
- der Rahmenüberhang (F) und/oder die Rahmenüberhang-Tragstruktur (FT1) hinten kürzere Vertikalträgersegmente aufweist als vorne, und/oder
- zwei hintere untere Anschlussknoten (FK1) weiter oben angeordnet sind als zwei vordere untere Anschlussknoten (FK1) des Rahmenüberhangs (F) und/oder der Rahmenüberhang-Tragstruktur (FT1).

7. Fahrzeugkonstruktion (100) nach einem der vorhergehenden Ansprüche, **dadurch gekennzeichnet, dass** zwei untere Längsträgersegmente (1.2, 1.4) des Rahmenüberhangs (F) und/oder der Rahmenüberhang-Tragstruktur (FT1) sich nach hinten oben erstrecken, vorzugsweise schräg oder im Wesentlichen S-förmig.

8. Fahrzeugkonstruktion (100) nach einem der vorhergehenden Ansprüche, **dadurch gekennzeichnet, dass** die Rahmenüberhang-Tragstruktur (FT1)
- zumindest eine horizontale Aussteifungsplatte (1Q) aufweist, die an Längsträgersegmente (1.1-1.4) der Rahmenüberhang-Tragstruktur (FT1) angebunden ist, und/oder
- zumindest eine vertikale Aussteifungsplatte (1Q) aufweist, die an Vertikalträgersegmente (1.9-1.12) der Rahmenüberhang-Tragstruktur (FT1) angebunden ist.

9. Fahrzeugkonstruktion (100) nach einem der vorhergehenden Ansprüche, **dadurch gekennzeichnet, dass** die hintere Tragstruktur (T3) vordere Anschlussknoten (K3) und hintere Anschlussknoten (K3) aufweist und die Rahmenüberhang-Tragstruktur (FT1) und die hintere Tragstruktur (T3) mittels vorzugsweise vier Anschlussknoten-Paare (K3-FK1) lösbar miteinander verbunden sind.

10. Fahrzeugkonstruktion (100) nach einem der vorhergehenden Ansprüche, **dadurch gekennzeichnet, dass** der Rahmenüberhang (F) zumindest zwei oder zumindest drei als Fahrzeug-Chassis-Module ausgebildete Rahmenüberhang-Tragstrukturen (FT2, FT3) umfasst, die jeweils mittels vorzugsweise vier Anschlussknoten-Paare (FK1-FK2, FK2-FK3) lösbar miteinander verbunden sind.

11. Fahrzeugkonstruktion (100) nach einem der vorhergehenden Ansprüche, **dadurch gekennzeichnet, dass** die hintere Tragstruktur (T3) die hinterste Hinterachse der Fahrzeugkonstruktion (100) aufweist und/oder eine Triebachse oder Nachlaufachse aufweist.

12. Fahrzeugkonstruktion (100) nach einem der vorhergehenden Ansprüche, **dadurch gekennzeichnet, dass** die hintere Tragstruktur (T3) mehrere Vertikalträgersegmente (3.9-3.12), mehrere Querträgersegmente (3Q) und beidseitig zumindest ein Längsträgersegment (3.1-3.4), vorzugsweise zwei im Wesentlichen in Höhenrichtung (H) der Fahrzeugkonstruktion (100) voneinander beabstandete Längsträgersegmente (3.1-3.4), aufweist.

13. Fahrzeugkonstruktion (100) nach einem der vorhergehenden Ansprüche, **dadurch gekennzeichnet, dass**
- die Vertikalträgersegmente (1.9-1.12; 3.9-3.12), die Querträgersegmente (1.5-1.8; 3.5-3.8) und/oder die Längsträgersegmente (1.1-1.4; 3.1-3.4) zumindest abschnittsweise als Blech- oder Profilbauteile ausgebildet sind, und/oder
- die Anschlussknoten (K1, K2, K3, FT1, FT2, FT3) als Guss-, Schmiede- oder Blechbauteil ausgebildet sind.

14. Nutzfahrzeug, vorzugsweise Lastkraftwagen, mit einer Fahrzeugkonstruktion (100) nach einem der vorhergehenden Ansprüche.

## Claims

1. Vehicle construction (100), preferably with a multiplicity of load-bearing structures (T1, T2, T3, FT1, FT2, FT3) which in each case form a vehicle chassis module, with
- a rear load-bearing structure (T3), on which a rear axle (41, 42) is mounted and which preferably forms a vehicle chassis module and comprises a plurality of connection nodes (K3), and
- a frame overhang (F) behind the rear load-bearing structure (T3),
**characterized in that**
- the frame overhang (F) has at least one frame overhang load-bearing structure (FT1), and the frame overhang load-bearing structure (FT1) is configured as a vehicle chassis module,
at least some connection node pairs (K2-K3, K3-FK1, FK1-Fk2, FK2-FK3) between the rear load-bearing structure (T3) and the frame overhang load-bearing structure (FT1) and/or between two frame overhang load-bearing structures (FT1, FT2) being connected releasably to one another by means of in each case one clamped connection and/or being connected releasably to one another via in each case at least one tensioning element (12) which extends substantially in the transverse direction (Q) of the vehicle construction (100),
the clamped connection comprising in each case two clamping jaws (10, 11) and/or at least one tensioning element (12) which preferably extends substantially in the transverse direction (Q) of the vehicle construction (100), and
it being possible for the two clamping jaws (10, 11) to be loaded towards one another via the tensioning element (12), the tensioning element (12) loading the two clamping jaws (10, 11) towards one another substantially in the transverse direction (Q) of the vehicle construction (100), and/or the two clamping jaws (10, 11) loading the connection node pairs (K2-K3, K3-FK1, FK1-FK2, FK2-FK3) towards one another substantially in the longitudinal direction (L) of the vehicle construction (100) .

2. Vehicle construction (100) according to Claim 1, **characterized in that** the frame overhang load-bearing structure (FT1) has front connection nodes (FK1) and/or rear connection nodes (FK1).

3. Vehicle construction (100) according to Claim 1 or 2, **characterized in that** the frame overhang load-bearing structure (FT1) has a plurality of vertical beam segments (1.9-1.12), a plurality of crossmember segments (1Q) and, on both sides, two longitudinal beam segments (1.1-1.4) which are spaced apart from one another substantially in the vertical direction (H) of the vehicle construction (100) .

4. Vehicle construction (100) according to Claim 2 or 3, **characterized in that** in each case one longitudinal beam segment (1.1-1.4) and preferably in each case one vertical beam segment (1.9-1.12) and/or in each case one crossmember segment (1Q) are attached to the four front connection nodes (FK1) and/or four rear connection nodes (FK1) of the frame overhang load-bearing structure (FT1).

5. Vehicle construction (100) according to one of the preceding claims, **characterized in that** the frame overhang (F) and/or the frame overhang load-bearing structure (FT1) taper/tapers towards the top rear at least in sections and/or have/has a smaller height on their/its rear side (FH) than on their/its front side (FV) .

6. Vehicle construction (100) according to one of the preceding claims, **characterized in that**
- the frame overhang (F) and/or the frame overhang load-bearing structure (FT1) have/has shorter vertical beam segments at the rear than at the front, and/or
- two rear lower connection nodes (FK1) are arranged further to the top than two front lower connection nodes (FK1) of the frame overhang (F) and/or of the frame overhang load-bearing structure (FT1).

7. Vehicle construction (100) according to one of the preceding claims, **characterized in that** two lower longitudinal beam segments (1.2, 1.4) of the frame overhang (F) and/or of the frame overhang load-bearing structure (FT1) extend towards the top rear, preferably obliquely or substantially in an S-shaped manner.

8. Vehicle construction (100) according to one of the preceding claims, **characterized in that** the frame overhang load-bearing structure (FT1)
- has at least one horizontal bracing plate (1Q) which is attached to longitudinal beam segments (1.1-1.4) of the frame overhang load-bearing structure (FT1), and/or
- has at least one vertical bracing plate (1Q) which is attached to vertical beam segments (1.9-1.12) of the frame overhang load-bearing structure (FT1).

9. Vehicle construction (100) according to one of the preceding claims, **characterized in that** the rear load-bearing structure (T3) has front connection nodes (K3) and rear connection nodes (K3), and the frame overhang load-bearing structure (FT1) and the rear load-bearing structure (T3) are connected to one another releasably by means of preferably for connection node pairs (K3-FK1) .

10. Vehicle construction (100) according to one of the preceding claims, **characterized in that** the frame overhang (F) comprises at least two or at least three frame overhang load-bearing structures (FT2, FT3) which are configured as vehicle chassis modules and are connected to one another releasably in each case by means of preferably four connection node pairs (FK1-FK2, FK2-FK3) .

11. Vehicle construction (100) according to one of the preceding claims, **characterized in that** the rear load-bearing structure (T3) has the rearmost rear axle of the vehicle construction (100) and/or has a drive axle or trailing axle.

12. Vehicle construction (100) according to one of the preceding claims, **characterized in that** the rear load-bearing structure (T3) has a plurality of vertical beam segments (3.9-3.12), a plurality of crossmember segments (3Q) and, on both sides, at least one longitudinal beam segment (3.1-3.4), preferably two longitudinal beam segments (3.1-3.4) which are spaced apart from one another substantially in the vertical direction (H) of the vehicle construction (100).

13. Vehicle construction (100) according to one of the preceding claims, **characterized in that**
- the vertical beam segments (1.9-1.12; 3.9-3.12), the crossmember segments (1.5-1.8; 3.5-3.8) and/or the longitudinal beam segments (1.1-1.4; 3.1-3.4) are configured at least in sections as sheet metal or profile components, and/or
- the connection nodes (K1, K2, K3, FT1, FT2, FT3) are configured as a cast, forged or sheet metal component.

14. Utility vehicle, preferably lorry, with a vehicle construction (100) according to one of the preceding claims.

## Revendications

1. Structure de véhicule (100), de préférence comportant une pluralité de structures porteuses (T1, T2, T3, FT1, FT2, FT3) qui forment respectivement un module de châssis de véhicule, comportant
- une structure porteuse arrière (T3), sur laquelle est monté un essieu arrière (41, 42) et qui forme de préférence un module de châssis de véhicule et comprend plusieurs nœuds de raccordement (K3), et
- un porte-à-faux de cadre (F) derrière la structure porteuse arrière (T3),
**caractérisée en ce que**
- le porte-à-faux de cadre (F) présente au moins une structure porteuse de porte-à-faux de cadre (FT1) et la structure porteuse de porte-à-faux de cadre (FT1) est réalisée sous forme de module de châssis de véhicule,
au moins certaines paires de nœuds de raccordement (K2-K3, K3-FK1, FK1-FK2-, FK2-FK3) étant reliées les unes aux autres de manière amovible respectivement au moyen d'une liaison serrée entre la structure porteuse arrière (T3) et la structure porteuse de porte-à-faux de cadre (FT1) et/ou entre deux structures porteuses de porte-à-faux de cadre (FT1, FT2) et/ou étant reliées les unes aux autres de manière amovible respectivement par le biais d'au moins un élément de serrage (12) s'étendant sensiblement dans la direction transversale (Q) de la structure de véhicule (100),
la liaison serrée comprenant respectivement deux mâchoires de serrage (10, 11) et/ou au moins un élément de serrage (12) s'étendant de préférence sensiblement dans la direction transversale (Q) de la structure de véhicule (100), et
les deux mâchoires de serrage (10, 11) pouvant être sollicitées l'une vers l'autre par le biais de l'élément de serrage (12), l'élément de serrage (12) sollicitant les deux mâchoires de serrage (10, 11) l'une vers l'autre sensiblement dans la direction transversale (Q) de la structure de véhicule (100) et/ou les deux mâchoires de serrage (10, 11) sollicitant les paires de nœuds de raccordement (K2-K3, K3-FK1, FK1-FK2-, FK2-FK3) les unes vers les autres sensiblement dans la direction longitudinale (L) de la structure de véhicule (100).

2. Structure de véhicule (100) selon la revendication 1, **caractérisée en ce que** la structure porteuse de porte-à-faux de cadre (FT1) présente des nœuds de raccordement avant (FK1) et/ou des nœuds de raccordement arrière (FK1) .

3. Structure de véhicule (100) selon la revendication 1 ou 2, **caractérisée en ce que** la structure porteuse de porte-à-faux de cadre (FT1) présente plusieurs segments de support vertical (1.9-1.12), plusieurs segments de traverse (1Q) et des deux côtés deux segments de longeron (1.1-1.4) espacés l'un de l'autre sensiblement dans la direction verticale (H) de la structure de véhicule (100) .

4. Structure de véhicule (100) selon la revendication 2 ou 3, **caractérisée en ce que** respectivement un segment de longeron (1.1-1.4) et de préférence respectivement un segment de support vertical (1.9-1.12) et/ou respectivement un segment de traverse (1Q) est respectivement connecté à quatre nœuds de raccordement avant (FK1) et/ou quatre nœuds de raccordement arrière (FK1) de la structure porteuse de porte-à-faux de cadre (FT1).

5. Structure de véhicule (100) selon l'une des revendications précédentes, **caractérisée en ce que** le porte-à-faux de cadre (F) et/ou la structure porteuse de porte-à-faux de cadre (FT1) se rétrécissent vers le haut et vers l'arrière au moins dans certaines parties et/ou présentent une hauteur plus petite au niveau de leur côté arrière (FH) qu'au niveau de leur côté avant (FV).

6. Structure de véhicule (100) selon l'une des revendications précédentes, **caractérisée en ce que**
- le porte-à-faux de cadre (F) et/ou la structure porteuse de porte-à-faux de cadre (FT1) présentent des segments de support vertical plus courts à l'arrière qu'à l'avant, et/ou
- deux nœuds de raccordement inférieurs arrière (FK1) sont disposés plus vers le haut que deux nœuds de raccordement inférieurs avant (FK1) du porte-à-faux de cadre (F) et/ou de la structure porteuse de porte-à-faux de cadre (FT1).

7. Structure de véhicule (100) selon l'une des revendications précédentes, **caractérisée en ce que** deux segments de longeron inférieurs (1.2, 1.4) du porte-à-faux de cadre (F) et/ou de la structure porteuse de porte-à-faux de cadre (FT1) s'étendent vers le haut et vers l'arrière, de préférence de manière inclinée ou sensiblement en forme de S.

8. Structure de véhicule (100) selon l'une des revendications précédentes, **caractérisée en ce que** la structure porteuse de porte-à-faux de cadre (FT1)
- présente au moins une plaque de raidissement horizontale (1Q) qui est connectée aux segments de longeron (1.1-1.4) de la structure porteuse de porte-à-faux de cadre (FT1), et/ou
- présente au moins une plaque de raidissement verticale (1Q) qui est connectée aux segments de support vertical (1.9-1.12) de la structure porteuse de porte-à-faux de cadre (FT1).

9. Structure de véhicule (100) selon l'une des revendications précédentes, **caractérisée en ce que** la structure porteuse arrière (T3) présente des nœuds de raccordement avant (K3) et des nœuds de raccordement arrière (K3) et la structure porteuse de porte-à-faux de cadre (FT1) et la structure porteuse arrière (T3) sont reliées l'une à l'autre de manière amovible au moyen de quatre paires de nœuds de raccordement (K3-FK1) de préférence.

10. Structure de véhicule (100) selon l'une des revendications précédentes, **caractérisée en ce que** le porte-à-faux de cadre (F) comprend au moins deux ou au moins trois structures porteuses de porte-à-faux de cadre (FT2, FT3) réalisées sous forme de modules de châssis de véhicule, lesquelles structures porteuses sont reliées respectivement les unes aux autres de manière amovible au moyen de quatre paires de nœuds de raccordement (FK1-FK2, FK2-FK3) de préférence.

11. Structure de véhicule (100) selon l'une des revendications précédentes, **caractérisée en ce que** la structure porteuse arrière (T3) présente l'essieu arrière le plus à l'arrière de la structure de véhicule (100) et/ou présente un essieu moteur ou un essieu suiveur.

12. Structure de véhicule (100) selon l'une des revendications précédentes, **caractérisée en ce que** la structure porteuse arrière (T3) présente plusieurs segments de support vertical (3.9-3.12), plusieurs segments de traverse (3Q) et des deux côtés au moins un segment de longeron (3.1-3.4), de préférence deux segments de longeron (3.1- 3.4) espacés l'un de l'autre sensiblement dans la direction verticale (H) de la structure de véhicule (100).

13. Structure de véhicule (100) selon l'une des revendications précédentes, **caractérisée en ce que**
- les segments de support vertical (1.9-1.12 ; 3.9-3.12), les segments de traverse (1.5-1.8 ; 3.5-3.8) et/ou les segments de longeron (1.1-1.4 ; 3.1-3.4) sont réalisés au moins dans certaines parties sous forme de composants en tôle ou profilés, et/ou
- les nœuds de raccordement (K1, K2, K3, FT1, FT2, FT3) sont réalisés sous forme de composant en fonte, forgé ou en tôle.

14. Véhicule utilitaire, de préférence poids lourd, comportant une structure de véhicule (100) selon l'une des revendications précédentes.
